# FASCICULE DE BREVET EUROPEEN

(11) **EP 3 412 935 B1**
(45) Date de publication et mention de la délivrance du brevet: **25.11.2020**
(21) Numéro de dépôt: 18162655.7
(22) Date de dépôt: 19.03.2018
(51) Int. Cl.: F16H 57/08, B64C 27/00, F16H 57/00

(54) **ROUE DENTÉE D'UN ENGRENAGE, DISPOSITIF D'ENGRENAGE, BOITE DE TRANSMISSION DE PUISSANCE ET AERONEF AYANT UNE VOILURE TOURNANTE**
ZAHNRAD EINES ZAHNRADGETRIEBES, GETRIEBEVORRICHTUNG, LEISTUNGSÜBERTRAGUNGSGETRIEBE UND LUFTFAHRZEUG MIT DREHFLÜGELN
TOOTHED WHEEL OF A GEAR, GEAR DEVICE, POWER TRANSMISSION BOX AND ROTARY-WING AIRCRAFT

(30) Priorité: 18.04.2017 FR 1770395
(43) Date de publication de la demande: 12.12.2018
(73) Titulaire: Airbus Helicopters, 13725 Marignane Cedex (FR)
(72) Inventeur: GOUJET, Damien, 13960 Sausset les Pins (FR)
(74) Mandataire: GPI & Associés

(56) Documents cités:
- EP-A1- 0 549 452
- WO-A1-2011/104433
- GB-A- 2 448 992
- US-A1- 2014 224 053
- US-A1- 2015 088 435

## Description

La présente invention concerne une roue dentée d'un engrenage, un dispositif d'engrenage ainsi qu'une boîte de transmission de transmission de puissance et un aéronef ayant une voilure tournante qui comprennent cette roue dentée.

L'invention se situe donc dans le domaine des engrenages, et notamment des boîtes de transmission de puissance d'un giravion.

Classiquement, un engrenage comporte deux roues dentées qui s'engrènent.

Une roue dentée d'un engrenage comporte usuellement un moyeu central. Ce moyeu central s'étend selon sa hauteur le long d'un axe de rotation du moyeu, d'une face inférieure à une face supérieure de ce moyeu. De plus, le moyeu peut être creux en son centre. Dès lors, le moyeu s'étend en épaisseur radialement, au regard de l'axe de rotation, d'une face interne jusqu'à une tranche périphérique.

En outre, la roue dentée comporte des dents portées par le moyeu. Par exemple, une roue dentée à denture radiale comprend des dents disposées sur la tranche périphérique de la roue, chaque dent étant en saillie radiale de la tranche périphérique. Une roue à denture frontale comporte des dents portées par la face supérieure du moyeu, chaque dent étant en saillie en élévation du moyeu.

Une roue dentée est susceptible de se détériorer lors de son utilisation. Une crique peut ainsi apparaitre. Une telle crique peut conduire au détachement d'une dent ou encore à l'ouverture de la roue dentée.

Par exemple, une crique peut s'étendre selon toute l'épaisseur et selon toute la hauteur du moyeu ce qui conduit à l'ouverture complète de la roue dentée. Une roue dentée ouverte a alors une forme de C en coupe dans un plan orthogonal à l'axe de rotation. Une telle ouverture complète est de fait soudaine et peut brusquement engendrer un dysfonctionnement de l'engrenage muni de la roue dentée détériorée, et par exemple un blocage de cet engrenage.

Pour améliorer la durée de vie d'une roue dentée, le document US 2008/0271317 propose d'exercer un effort sur le moyeu de la roue dentée. Ainsi, au moins une bande en matériaux composites est enroulée autour du moyeu et exerce un effort sur ce moyeu.

Pour réaliser une telle roue, un outillage est utilisé pour serrer la roue, puis la bande est enroulée sur le moyeu. Lorsque l'outil est enlevé, la bande est de fait plaquée contre le moyeu pour exercer une pression sur la circonférence de ce moyeu.

Le document FR 2584996 décrit une tête de rotor, et n'a donc pas de lien avec la durée de vie d'une roue dentée d'un engrenage.

Les documents US2014/224053 et EP0549452 sont aussi connus.

La présente invention a alors pour objet de proposer une roue dentée innovante pour tendre à limiter les conséquences d'une ouverture d'une roue dentée.

L'invention vise donc une roue dentée d'un engrenage, la roue dentée comprenant un moyeu et des dents portées par le moyeu, le moyeu s'étendant en élévation le long d'un axe de rotation du moyeu sur lui-même. Le moyeu peut s'étendre radialement, à savoir orthogonalement à l'axe de rotation, jusqu'à une tranche périphérique. Le moyeu comporte un tronçon annulaire médian portant les dents et au moins un tronçon annulaire d'extrémité en saillie en élévation du tronçon annulaire médian.

La roue dentée comporte au moins un anneau de retenue, l'anneau de retenue étant disposé autour d'une portion dite « portion de retenue » d'un dit tronçon annulaire d'extrémité, un jeu radial séparant radialement l'anneau de retenue et la portion de retenue dans un plan orthogonal à l'axe de rotation, l'anneau de retenue ayant pour fonction de limiter une ouverture dudit moyeu suite à une crique.

La crique d'une roue dentée classique peut induire une ouverture complète et subite de cette roue dentée, et un dysfonctionnement de l'engrenage comprenant cette roue dentée.

L'invention propose d'agencer un anneau de retenue qui entoure circonférentiellement la roue dentée, au regard de son axe de rotation et sur toute une circonférence de la roue dentée. Un jeu radial est néanmoins ménagé entre l'anneau de retenue et le moyeu. Dès lors, l'anneau de retenue n'exerce pas une contrainte radiale sur la roue dentée pour augmenter sa résistance en l'absence de crique sur la roue dentée, mais limite l'ouverture de la roue dentée en présence d'une crique coupant totalement le moyeu.

L'anneau de retenue est ainsi non pas un moyen de compression mais une sangle de maintien rigide qui tend à permettre sensiblement le maintien de l'intégrité géométrique de la roue dentée en présence d'une telle crique.

Ainsi, l'anneau de retenue tend à au moins retarder pendant une certaine durée un dysfonctionnement de l'engrenage, suite à une ouverture du moyeu due à une crique, en limitant l'ouverture de la roue dentée durant un mode secours. Pendant ladite durée, l'engrenage muni de la roue dentée peut alors fonctionner. De plus, le défaut de la roue dentée peut être signalé à un opérateur, afin que la roue dentée soit remplacée avant destruction de l'engrenage.

Par exemple, en présence d'une crique, la roue dentée s'ouvre dans les limites imposées par l'anneau de retenue. L'anneau de retenue contient la roue dentée dans un volume restreint sans éclatement de l'engrenage. Cette ouverture partielle génère une vibration détectable et susceptible d'être signalée à un opérateur par une alarme visuelle, sonore ou encore tactile éventuellement.

La roue dentée peut de plus comporter une ou plusieurs des caractéristiques qui suivent.

Ainsi, l'anneau de retenue peut n'exercer aucun effort radial de compression sur le moyeu en l'absence d'une dite crique sur le moyeu.

Selon un aspect, l'anneau de retenue peut aussi présenter une liberté de mouvement par rapport au moyeu selon une direction parallèle audit axe de rotation, ladite liberté de mouvement étant restreinte à un jeu axial.

Par exemple, au moins un jeu axial sépare en élévation l'anneau de retenue de deux organes d'arrêt. Le jeu axial peut faciliter la mise en place de l'anneau de retenue.

En position, l'anneau de retenue est donc maintenu autour du moyeu, en ayant uniquement une liberté de mouvement restreinte radialement en raison du jeu radial et en élévation en raison du jeu axial.

Selon un autre aspect, le jeu radial est par exemple inférieur à 0.5 millimètres. Ce jeu radial peut dépendre de la dimension des dents. Le cas échéant, le jeu axial est un jeu de montage réduit au minimum.

Selon un aspect, le tronçon annulaire médian étant inscrit géométriquement dans un cylindre virtuel médian présentant un rayon dit « rayon médian », ladite portion de retenue du tronçon annulaire d'extrémité étant inscrite géométriquement dans un cylindre virtuel d'extrémité présentant un rayon dit « rayon d'extrémité », le rayon médian peut être supérieur au rayon d'extrémité.

L'expression « cylindre virtuel » désigne une forme géométrique délimitant les organes correspondant.

Selon un aspect, l'anneau de retenue peut être inscrit géométriquement dans un cylindre virtuel de retenue présentant un rayon dit « rayon de retenue », le rayon de retenue est inférieur ou égal au rayon médian.

Selon un aspect, le tronçon annulaire d'extrémité peut présenter une butée axiale en saillie radialement de ladite portion de retenue , ladite portion de retenue étant agencée en élévation entre ladite butée axiale et le tronçon annulaire médian, ledit anneau de retenue étant bloqué en élévation entre le tronçon annulaire médian et ladite butée axiale, au moins un jeu axial séparant en élévation ledit anneau de retenue et le tronçon annulaire médian ou ledit anneau de retenue et ladite butée axiale.

Le terme « bloqué » signifie que l'anneau de retenue est contraint de rester agencé axialement dans un espace situé entre le tronçon annulaire médian et la butée axiale, cet espace étant délimité axialement au moins par la butée axiale voire par le tronçon annulaire médian ou une autre face du tronçon annulaire d'extrémité. Le jeu axial confère toutefois à l'anneau de retenue une liberté de mouvement restreinte entre le tronçon annulaire médian et la butée axiale.

La butée axiale et la portion de retenue peuvent délimiter un espace annulaire, au moins partiellement, ledit anneau de retenue étant au moins partiellement agencé dans ledit espace annulaire. Cet espace annulaire peut prendre la forme d'une gorge en C du moyeu, la gorge étant par exemple délimitée radialement par la portion de retenue et axialement par la butée axiale ainsi que par le tronçon annulaire médian.

La butée axiale et la portion de retenue peuvent être deux parties constitutives du moyeu, voire du tronçon annulaire d'extrémité.

Par ailleurs, l'anneau de retenue peut comporter une matière qui se dilate sous l'effet de la chaleur.

Par exemple, l'anneau de retenue peut être réalisé à partir d'au moins un métal. Ainsi, l'anneau de retenue est chauffé pour être dilaté afin de pouvoir passer autour de la butée axiale. En refroidissant, l'anneau de retenue se rétracte pour être coincé en élévation par la butée axiale voire aussi par le tronçon annulaire médian. Un jeu radial sépare alors l'anneau de retenue et le moyeu, et un jeu axial sépare l'anneau de retenue du tronçon médian et/ou de la butée axiale.

Selon un autre exemple, l'anneau de retenue est un anneau en spirale.

Un tel anneau en spirale peut être un anneau de la marque spirilox®. Un anneau en spirale comporte un organe décrivant une spire sur plus d'un tour, et par exemple un tour et demi.

Un tel anneau en spirale est usuellement utilisé en tant que bague d'arrêt axial. L'invention confère une toute autre fonction à l'anneau en spirale.

Pour être mis en place, l'anneau en spirale peut être légèrement étiré afin de positionner les spires dans l'espace en élévation compris entre la butée axiale et le tronçon médian. Un jeu radial sépare alors l'anneau en spirale et le moyeu, et un jeu axial sépare l'anneau en spirale du tronçon médian et/ou de la butée axiale

Selon un exemple, le tronçon annulaire d'extrémité peut présenter une gorge, ladite portion de retenue décalant en élévation ladite gorge par rapport au tronçon annulaire médian, la butée axiale comportant un anneau élastique qui est inséré dans ladite gorge et qui s'étend en dehors de ladite gorge, ledit anneau de retenue entourant ladite portion de retenue , ledit anneau de retenue étant bloqué en élévation entre le tronçon annulaire médian et l'anneau élastique, au moins un jeu axial séparant en élévation ledit anneau de retenue et le tronçon annulaire médian ou ledit anneau élastique.

L'anneau élastique peut être un anneau ouvert à œillets, notamment à œillets externes. L'anneau élastique peut être un anneau connu sous la dénomination « Circlips ».

L'anneau de retenue est disposé autour de la portion de retenue. L'anneau élastique est alors positionné partiellement dans la gorge pour limiter les déplacements en élévation de l'anneau de retenue.

Selon un aspect, la roue dentée peut comprendre au moins deux dits anneaux de retenue qui sont disposés en élévation de part et d'autre d'un tronçon annulaire médian du moyeu portant les dents.

Selon un aspect, la roue dentée peut être une roue de conjugaison et/ou un satellite d'un train d'engrenages épicycloïdal.

L'invention vise aussi un dispositif d'engrenage muni d'une roue dentée selon cette invention.

De plus, le dispositif d'engrenage peut comprendre un système de mesure de vibrations mesurant des vibrations induites notamment émis par ladite roue dentée.

Le système de mesure de vibrations peut être un système usuel. Par exemple, le système de mesure de vibrations est un système connu sous l'expression anglaise « Health and usage monitoring systems » et l'acronyme « HUMS ».

La rotation de la roue dentée au sein de l'engrenage génère une vibration particulière, par exemple une vibration générant un bruit audible. Lorsque la roue dentée s'ouvre partiellement en étant sensiblement maintenue en forme par l'anneau de retenue, cette vibration change ce qui rend détectable le défaut par le système de mesure de vibrations.

Ainsi, l'invention permet d'éviter une rupture soudaine et importante rendant inopérable l'engrenage, en limitant l'ouverture de la roue dentée pour permettre la détection du défaut et le remplacement de la roue dentée.

Ainsi, selon le procédé appliqué, les étapes suivantes sont entreprises :
- réalisation d'un enregistrement de la signature vibratoire de la roue dentée et/ou de l'engrenage muni de cette roue dentée alors que cette roue dentée ne présente pas de crique, par exemple sous la forme d'un spectre vibratoire,
- mémorisation de la signature vibratoire,
- réalisation d'une surveillance en opération en mesurant les vibrations courantes induites par la roue dentée et/ou par l'engrenage, par exemple sous la forme de mesure de vibrations,
- émission d'une alerte visuelle et/ou sonore et/ou tactile si les vibrations courantes diffèrent de ladite signature vibratoire.

L'invention vise aussi une boîte de transmission de puissance destinée à transmettre une puissance d'une installation motrice vers un rotor participant au moins à la sustentation et/ou à la propulsion d'un aéronef. Cette boîte de transmission de puissance est munie d'une roue dentée selon cette invention.

Ladite boîte de transmission de puissance peut aussi comporter un système de mesure de vibrations mesurant des vibrations induites par ladite roue dentée.

L'invention vise aussi un aéronef muni d'une roue dentée selon cette invention. L'aéronef peut comporter un système de mesure de vibrations mesurant des vibrations induites par ladite roue dentée.

L'invention et ses avantages apparaîtront avec plus de détails dans le cadre de la description qui suit avec des exemples donnés à titre illustratif en référence aux figures annexées qui représentent :
- la figure 1, un schéma présentant une roue dentée selon l'invention agencée au sein d'un aéronef,
- les figures 2 à 4, des schémas illustrant des roues dentées selon l'invention,
- la figure 5, un schéma illustrant l'anneau en spirale visible sur la figure 3, et
- la figure 6, un schéma illustrant l'anneau élastique visible sur la figure 4.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale.

La deuxième direction Y est dite transversale.

Enfin, la troisième direction Z est dite en élévation. L'expression « en élévation » est relative à toute direction parallèle à la troisième direction Z.

La première direction X, la deuxième direction Y et la troisième direction Z forme un trièdre rectangle

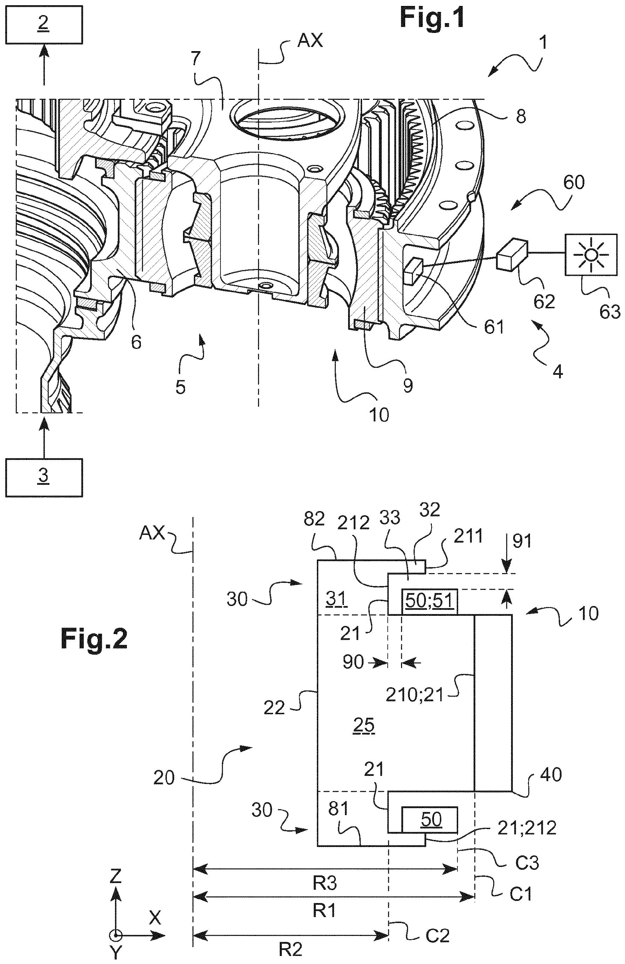

La figure 1 présente un aéronef 1 muni d'une roue dentée 10 selon l'invention.

Cet aéronef 1 peut comporter au moins un rotor 2. Ce rotor 2 peut au moins participer à la sustentation et/ou à la propulsion de l'aéronef 1. De plus, l'aéronef peut comporter une installation motrice ayant au moins un moteur 3 pour mettre en mouvement le rotor 2.

Dès lors, l'aéronef 1 peut comporter une boîte de transmission de puissance 4 interposée entre le moteur 3 et le rotor 2. Le moteur 3 est alors relié mécaniquement à la boîte de transmission de puissance 4, cette boîte de transmission de puissance 4 étant mécaniquement reliée au rotor 2.

La boîte de transmission de puissance 4 peut comprendre au moins une roue de conjugaison et/ou un train d'engrenages épicycloïdal 5. Un tel train d'engrenages épicycloïdale 5 comporte une roue planétaire 6 et une couronne externe 8. De plus, le train d'engrenages épicycloïdal 5 comporte des roues formant des satellites 9 partiellement illustrés qui sont portés par un porte-satellites 7. Les satellites 9 sont en prise sur la roue planétaire et la couronne externe 8. Par exemple, le moteur 3 induit la rotation de la roue planétaire 6, la couronne externe 8 étant immobile. Dès lors, la rotation de la roue planétaire induit la rotation de chaque satellite 9 et son déplacement le long de la couronne externe 8. Le porte-satellites 7 est alors mis en rotation et peut induire la rotation du rotor 2.

Dès lors, l'aéronef 1 peut comprendre une roue dentée 10 selon l'invention. Par exemple, chaque satellite 9 de la boîte de transmission de puissance prend la forme d'une telle roue dentée 10.

Toutefois, une telle roue dentée 10 peut aussi prendre la forme d'une autre roue de l'aéronef, telle que par exemple une roue de conjugaison de la boîte de transmission de puissance, la roue planétaire...

Une telle roue dentée peut aussi être agencée sur n'importe quel type d'engrenage, et pas nécessairement un engrenage de véhicule.

Par ailleurs, une telle roue dentée 10 peut être associée à un système de mesure de vibrations 60 pour former un dispositif d'engrenage. Un tel système de mesure de vibrations 60 peut comprendre un capteur de vibrations 61, un calculateur 62, voire un système d'alerte 63.

Le capteur de vibrations 61 peut être un capteur usuel, et par exemple peut comprendre au moins un accéléromètre.

Le calculateur 62 peut comprendre par exemple au moins un processeur, au moins un circuit intégré, au moins un système programmable, au moins un circuit logique, ces exemples ne limitant pas la portée donnée à l'expression « calculateur ».

Le système d'alerte 63 peut comprendre un écran ou une lampe pour afficher une alerte par exemple sous la forme d'un symbole, d'un texte, d'une lumière, et/ou peut comprendre une enceinte émettant un son, et/ou peut comprendre un système haptique...

La figure 2 illustre une coupe radiale d'une roue dentée 10 selon l'invention.

La roue dentée 10 peut être à symétrie de révolution autour de l'axe de rotation AX de la roue dentée sur elle-même.

En outre, la roue dentée 10 est munie d'un moyeu 20 et de dents 40.

Le moyeu 20 peut être à symétrie de révolution autour de l'axe de rotation AX. Ce moyeu 20 peut aussi être creux en son centre. Le moyeu peut représenter le cylindre de pied de la roue dentée 10 selon l'expression consacrée.

Indépendamment de ces aspects, le moyeu 20 s'étend en élévation d'une extrémité inférieure 81 vers une extrémité supérieure 82 selon un sens parallèle à l'axe de rotation AX. De plus, le moyeu 20 s'étend radialement de l'axe de rotation AX ou d'une face interne 22 vers une tranche périphérique 21.

De façon générale, le terme « radialement » fait référence à toute direction orthogonale à l'axe de rotation AX.

La tranche périphérique 21 s'étend donc en élévation de l'extrémité inférieure 81 jusqu'à l'extrémité supérieure 82. La tranche périphérique peut comprendre plusieurs tronçons ayant des rayons divers au regard de l'axe de rotation AX. La tranche périphérique 21 peut être à symétrie de révolution autour de l'axe de rotation AX.

Par ailleurs, les dents 40 sont portées par le moyeu 20. En particulier, les dents peuvent être en saillie radialement de la tranche périphérique 21, les dents s'étendant radialement à partir du moyeu. De telles dents peuvent être sensiblement parallèles à l'axe de rotation ou peuvent présenter une inclinaison. Ainsi, la roue dentée peut prendre la forme d'une roue à denture droite ou encore à denture hélicoïdale par exemple.

Par ailleurs, la roue dentée 10 est munie d'au moins un anneau de retenue 50. Selon l'exemple de la figure 2, deux anneaux de retenue 50 sont disposés en élévation respectivement de part et d'autre d'un tronçon médian du moyeu portant les dents 40.

Chaque anneau de retenue 50 est disposé autour de ladite tranche périphérique 21. Chaque anneau de retenue 50 entoure ainsi une tranche périphérique d'un tronçon du moyeu dans un plan orthogonal à l'axe de rotation AX. Chaque anneau de retenue 50 peut donc s'étendre sur 360 degrés pour complétement entourer un tronçon du moyeu.

Toutefois, aucun anneau de retenue n'est plaqué contre le moyeu sur toute sa circonférence. En effet, un jeu radial 90 sépare radialement chaque anneau de retenue 50 et la tranche périphérique 21, dans un plan orthogonal à l'axe de rotation AX. Aucun anneau de retenue 50 n'exerce donc un effort radial de compression sur le moyeu 20 en l'absence d'une crique sur le moyeu 20.

Dès lors, un anneau de retenue 50 représente une ceinture visant à limiter une ouverture du moyeu 20 suite à une crique.

De plus, au moins un voire chaque anneau de retenue 50 peut présenter en élévation une liberté de mouvement par rapport au moyeu 20. Dès lors, un jeu axial 91 sépare un tel anneau de retenue d'une butée, cette butée pouvant être une partie constitutive du moyeu 20 ou un organe coopérant avec le moyeu 20.

Plus précisément, le moyeu 20 peut être décomposé géométriquement en une pluralité de tronçons empilés les uns au dessus des autres selon l'axe de rotation AX.

En particulier, le moyeu 20 peut comporter un tronçon annulaire médian 25 portant les dents 40. Ce tronçon annulaire médian 25 est inscrit géométriquement dans un cylindre virtuel médian C1 présentant un rayon dit « rayon médian R1 ». Par suite, la tranche périphérique 21 peut décrire un cylindre à base circulaire présentant ledit rayon médian R1 au niveau du tronçon annulaire médian 25.

De plus, le moyeu peut comprendre au moins un tronçon annulaire d'extrémité 30 accolé au tronçon annulaire médian 25 de manière à être en saillie en élévation Z dudit tronçon annulaire médian 25. Chaque tronçon annulaire d'extrémité 30 s'étend en élévation à partir du tronçon annulaire médian 25 selon un sens de manière à dépasser du tronçon annulaire médian 25 et des dents selon l'axe de rotation AX. Par exemple, le moyeu de la figure 2 comporte successivement un tronçon annulaire d'extrémité 30 puis le tronçon annulaire médian 25 et enfin un autre tronçon annulaire d'extrémité 30. Les deux tronçons annulaire d'extrémité 30 peuvent être symétriques l'un par rapport à l'autre au regard d'un plan transversal orthogonal à l'axe de rotation AX passant par le tronçon annulaire médian 25.

Chaque tronçon annulaire d'extrémité 30 présente une portion de retenue 31 qui est inscrite géométriquement dans un cylindre virtuel d'extrémité C2 présentant un rayon dit « rayon d'extrémité R2 ». Par suite, la tranche périphérique 21 peut décrire un cylindre à base circulaire présentant ledit rayon d'extrémité R2 au niveau d'une portion de retenue 31 d'un tronçon annulaire d'extrémité 30.

Dès lors, le rayon médian R1 est supérieur au rayon d'extrémité R2. Par suite, la portion 212 de la tranche périphérique 21 au niveau d'une portion de retenue 31 d'un tronçon annulaire d'extrémité 30 est en retrait radialement par rapport à la portion 210 de la tranche périphérique 21 au niveau du tronçon annulaire médian 25.

Au moins un voire chaque anneau de retenue 50 entoure en outre un tronçon annulaire d'extrémité 30 et notamment sa portion de retenue 31. Par exemple, deux anneaux de retenue 50 sont disposés en élévation de part et d'autre du tronçon annulaire médian 25 du moyeu 20.

En outre, au moins un voire chaque anneau de retenue 50 est inscrit géométriquement dans un cylindre virtuel de retenue C3 présentant un rayon dit « rayon de retenue R3 », quelle que soit la position de l'anneau de retenue par rapport au moyeu 20. Dès lors, le rayon de retenue R3 peut être inférieur ou égal au rayon médian R1 pour que l'anneau de retenue ne couvre pas une ou plusieurs dents, même partiellement.

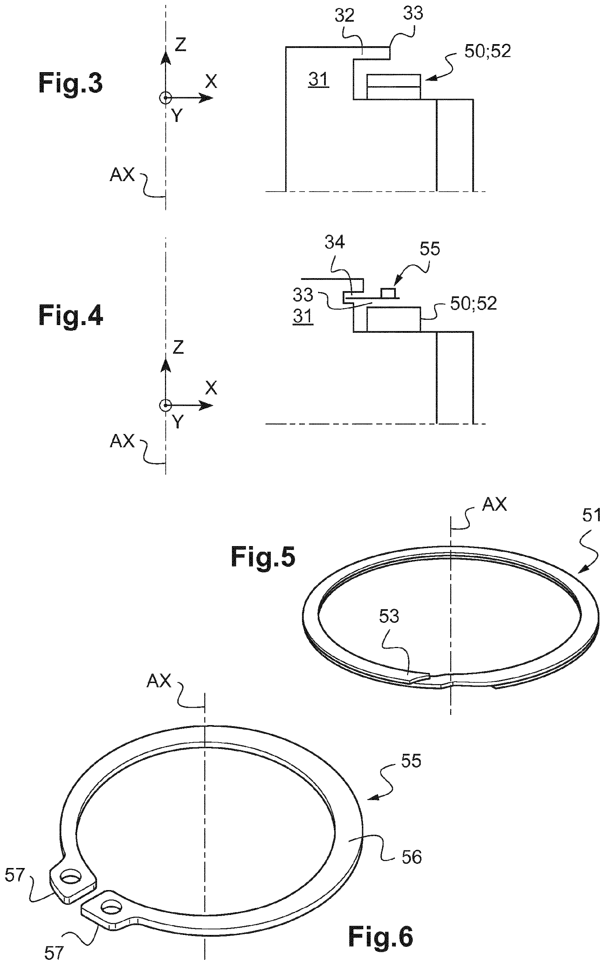

Selon la réalisation des figures 2 et 3, au moins un tronçon annulaire d'extrémité 30 présente une portion de retenue 31 solidaire d'une butée axiale 32. La butée axiale 32 est ainsi relié au tronçon annulaire médian 25 par la portion de retenue 31.

La portion de retenue 31 écarte ainsi en élévation la butée axiale 32 par rapport au tronçon annulaire médian 25. De plus, la butée axiale 32 est en saillie radiale de la portion de retenue 31, voire recouvre la portion de retenue 31.

Eventuellement, la butée axiale et la portion de retenue sont deux parties constitutives du moyeu. La butée axiale et la portion de retenue forment conjointement une seule et même pièce qui délimite une gorge accueillant au moins partiellement l'anneau de retenue.

La butée axiale peut être de forme annulaire ou encore peut comprendre une pluralité d'ergots.

Dès lors, la portion de retenue 31 et la butée axiale 32 voire le tronçon annulaire médian 25 ménagent un espace 33 ouvert ayant une forme de C en coupe. Cet espace 33 peut être annulaire et susceptible de contenir au moins partiellement un anneau de retenue 50.

En effet, un anneau de retenue 50 entoure la portion de retenue 31 en étant logé au moins partiellement dans cet espace 33. Par conséquent, l'anneau de retenue 50 est agencé en élévation entre le tronçon annulaire médian 25 et la butée axiale 32.

En outre, au moins un jeu axial 91 sépare en élévation l'anneau de retenue 50 et le tronçon annulaire médian 25 et/ou la butée axiale 32.

L'anneau de retenue 50 ne peut donc pas se détacher du moyeu sans intervention humaine mais possède une liberté de mouvement axialement entre la butée axiale 32 et le tronçon annulaire médian 25.

Selon la variante de la figure 2, l'anneau de retenue 50 comporte une matière qui se dilate sous l'effet de la chaleur pour être agencé dans l'espace 33. Par exemple, l'anneau de retenue 50 est un anneau métallique 51.

Selon la variante de la figure 3 l'anneau de retenue 50 est un anneau en spirale 52.

La figure 5 illustre un tel anneau en spirale 52. L'anneau en spirale 52 comporte une bande 53 enroulée en spirale. Par exemple, une telle bande peut être réalisée à partir d'un métal, de matériaux composites...

Selon la réalisation de la figure 4, la butée axiale est remplacée par un anneau élastique 55 d'arrêt.

Dès lors, au moins un voire chaque tronçon annulaire d'extrémité 30 présente une portion de retenue 31 prolongée par une portion externe munie d'une gorge 34.

La gorge 34 est ainsi séparée en élévation du tronçon annulaire médian 25 par la portion de retenue 31. Cette portion de retenue 31 peut comprendre une portion de la tranche périphérique 21 qui décrit un cylindre à base circulaire, en particulier le cylindre virtuel d'extrémité C2.

La portion de retenue 31 écarte ainsi en élévation la gorge 34 par rapport au tronçon annulaire médian 25. De plus, la gorge 34 est en retrait radialement de la portion de retenue 31.

Dès lors, un anneau élastique 55 peut être inséré de manière réversible dans la gorge 34, cet anneau élastique 55 s'étendant de plus en dehors de la gorge 34. Le tronçon annulaire médian 25 ainsi que la portion de retenue 31 et l'anneau élastique 55 ménagent un espace 33 ouvert ayant une forme de C en coupe. Cet espace 33 peut être annulaire et susceptible de contenir au moins partiellement un anneau de retenue 50.

Un anneau de retenue 50 entoure alors la portion de retenue 31 en étant logé au moins partiellement dans cet espace 33. Par conséquent, l'anneau de retenue 50 est agencé en élévation entre le tronçon annulaire médian 25 et l'anneau élastique 55. En outre, au moins un jeu axial 91 sépare en élévation l'anneau de retenue 50 et le tronçon annulaire médian 25 ou l'anneau élastique 55.

L'anneau de retenue 50 ne peut donc pas se détacher du moyeu sans intervention humaine mais possède une liberté de mouvement axialement entre l'anneau élastique 55 et le tronçon annulaire médian 25.

La figure 6 illustre un anneau élastique 55. Cet anneau élastique comporte un segment 56 en forme de C débouchant sur deux œillets 57.

L'utilisation d'un anneau élastique autorise alors l'utilisation d'un anneau de retenue 50 non déformable. Par exemple, l'anneau de retenue est réalisé à partir de matériaux composites.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la roue dentée 10 peut comporter un unique anneau de retenue.

Selon un autre exemple, la gorge 34 de la figure 4 accueille non pas un anneau élastique d'arrêt mais un anneau de retenue du type des figures 2 et 3.

Selon un autre aspect, au moins une bague de protection non représentée sur les figures visant à au moins limiter un phénomène dit de « fretting » en langue anglaise peur être agencée entre l'anneau de retenue et le moyeu. Par exemple, une telle bague est accolée ou intégrée à l'anneau de retenue. Eventuellement, deux bagues sont disposées en élévation de part et d'autre de l'anneau de retenue.

## Revendications

1. Roue dentée (10) d'un engrenage, ladite roue dentée (10) comprenant un moyeu (20) et des dents (40) portées par le moyeu (20), ledit moyeu (20) s'étendant en élévation (Z) le long d'un axe de rotation (AX) du moyeu sur lui-même, ledit moyeu (20) comportant un tronçon annulaire médian (25) portant lesdites dents (40) et au moins un tronçon annulaire d'extrémité (30) en saillie en élévation (Z) dudit tronçon annulaire médian (25), ladite roue dentée (10) comporte au moins un anneau de retenue (50), ledit anneau de retenue (50) étant disposé autour d'une portion dite « portion de retenue (31) » d'un dit tronçon annulaire d'extrémité (30)
**caractérisée en ce que** un jeu radial (90) sépare radialement ledit anneau de retenue (50) et ladite portion de retenue (31) dans un plan orthogonal à l'axe de rotation, ledit anneau de retenue (50) ayant pour fonction de limiter une ouverture dudit moyeu (20) suite à une crique pour générer une vibration détectable.

2. Roue dentée selon la revendication 1,
**caractérisée en ce que** ledit anneau de retenue (50) n'exerce aucun effort radial de compression sur ledit moyeu (20) en l'absence d'une dite crique sur le moyeu (20).

3. Roue dentée selon l'une quelconque des revendications 1 à 2,
**caractérisée en ce que** ledit anneau de retenue (50) présente une liberté de mouvement par rapport audit moyeu (20) selon une direction parallèle audit axe de rotation (AX), ladite liberté de mouvement étant restreinte à un jeu axial (91).

4. Roue dentée selon l'une quelconque des revendications 1 à 3,
**caractérisée en ce que** ledit tronçon annulaire médian (25) étant inscrit géométriquement dans un cylindre virtuel médian (C1) présentant un rayon dit « rayon médian (R1) », ladite portion de retenue du tronçon annulaire d'extrémité (30) étant inscrite géométriquement dans un cylindre virtuel d'extrémité (C2) présentant un rayon dit « rayon d'extrémité (R2) », ledit rayon médian (R1) est supérieur au rayon d'extrémité (R2).

5. Roue dentée selon la revendication 4,
**caractérisée en ce que** ledit anneau de retenue (50) étant inscrit géométriquement dans un cylindre virtuel de retenue (C3) présentant un rayon dit « rayon de retenue (R3) », ledit rayon de retenue (R3) est inférieur ou égal au rayon médian (R1).

6. Roue dentée selon l'une quelconque des revendications 1 à 5,
**caractérisée en ce que** ledit tronçon annulaire d'extrémité (30) présente une butée axiale (32) en saillie radialement de ladite portion de retenue (31), ladite portion de retenue (31) étant agencée en élévation entre ladite butée axiale (32) et le tronçon annulaire médian (25), ledit anneau de retenue (50) étant bloqué en élévation entre le tronçon annulaire médian (25) et ladite butée axiale (32), au moins un jeu axial (91) séparant en élévation ledit anneau de retenue (50) et le tronçon annulaire médian (25) ou ledit anneau de retenue (50) et ladite butée axiale (32).

7. Roue dentée selon la revendication 6,
**caractérisée en ce que** ledit anneau de retenue (50) comporte une matière qui se dilate sous l'effet de la chaleur.

8. Roue dentée selon l'une quelconque des revendications 4 à 5,
**caractérisée en ce que** ledit anneau de retenue (50) est un anneau en spirale (52).

9. Roue dentée selon l'une quelconque des revendications 6 à 8,
**caractérisée en ce que** ladite butée axiale et ladite portion de retenue (31) délimite un espace annulaire (33), ledit anneau de retenue (50) étant au moins partiellement agencé dans ledit espace annulaire.

10. Roue dentée selon l'une quelconque des revendications 6 à 9,
**caractérisée en ce que** ladite butée axiale et ladite portion de retenue (31) sont deux parties constitutives du moyeu.

11. Roue dentée selon l'une quelconque des revendications 1 à 9,
**caractérisée en ce que** ledit tronçon annulaire d'extrémité (30) présente une gorge (34), ladite portion de retenue (31) décalant en élévation ladite gorge (34) par rapport au tronçon annulaire médian (25), ladite butée axiale comporte un anneau élastique (55) qui est inséré dans ladite gorge (34) et qui s'étend en dehors de ladite gorge (34), ledit anneau de retenue (50) étant bloqué en élévation entre le tronçon annulaire médian (25) et l'anneau élastique (55), au moins un jeu axial (91) séparant en élévation ledit anneau de retenue (50) et le tronçon annulaire médian (25) ou ledit anneau de retenue (50) et ledit anneau élastique (55).

12. Roue dentée selon l'une quelconque des revendications 1 à 9,
**caractérisée en ce que** ladite roue dentée (10) comprend au moins deux dits anneaux de retenue (50) qui sont disposés en élévation de part et d'autre du tronçon annulaire médian (25) du moyeu (20).

13. Roue dentée selon l'une quelconque des revendications 1 à 10,
**caractérisée en ce que** ladite roue dentée (10) est une roue de conjugaison ou un satellite d'un train d'engrenages épicycloïdal (5).

14. Dispositif d'engrenage,
**caractérisé en ce que** ledit dispositif d'engrenage comporte une roue dentée (10) selon l'une quelconque des revendications 1 à 11, ledit dispositif d'engrenage comprenant un système de mesure de vibrations (60) mesurant des vibrations induites par ladite roue dentée (10).

15. Boîte de transmission de puissance (4) destinée à transmettre une puissance d'une installation motrice (3) vers un rotor (2) participant au moins à la sustentation ou à la propulsion d'un aéronef (1),
**caractérisée en ce que** ladite boîte de transmission de puissance (4) comporte une roue dentée (10) selon l'une quelconque des revendications 1 à 11.

16. Boîte de transmission de puissance selon la revendication 15,
**caractérisée en ce que** ladite boîte de transmission de puissance (4) comporte un système de mesure de vibrations (60) mesurant des vibrations induites par ladite roue dentée (10).

17. Aéronef (1),
**caractérisé en ce que** ledit aéronef (1) comporte une roue dentée (10) selon l'une quelconque des revendications 1 à 11

18. Aéronef (1) selon la revendication 17,
**caractérisé en ce que** ledit aéronef (1) comporte un système de mesure de vibrations (60) mesurant des vibrations induites par ladite roue dentée (10).

## Patentansprüche

1. Zahnrad (10) eines Zahnradgetriebes, wobei das Zahnrad (10) eine Nabe (20) und von der Nabe (20) getragene Zähne (40) aufweist, wobei sich die Nabe (20) in der Höhe (Z) entlang einer Achse (AX) der Drehung der Nabe um sich selbst erstreckt, wobei die Nabe (20) einen ringförmigen Mittelabschnitt (25), der die Zähne (40) trägt, und mindestens einen ringförmigen Endabschnitt (30) umfasst, der in der Höhe (Z) über den ringförmigen Mittelabschnitt (25) übersteht, wobei das Zahnrad (10) mindestens einen Haltering (50) umfasst, wobei der Haltering (50) um einen als "Halteabschnitt (31)" bezeichneten Abschnitt eines besagten ringförmigen Endabschnitts (30) herum angeordnet ist,
**dadurch gekennzeichnet, dass** ein radiales Spiel (90) den Haltering (50) und den Halteabschnitt (31) in einer zur Drehachse senkrechten Ebene radial trennt, wobei der Haltering (50) dazu dient, eine Öffnung der Nabe (20) als Folge eines Risses zu begrenzen, um eine erfassbare Schwingung zu erzeugen.

2. Zahnrad nach Anspruch 1,
**dadurch gekennzeichnet, dass** in Abwesenheit eines derartigen Risses an der Nabe (20) der Haltering (50) keine radiale Druckkraft auf die Nabe (20) ausübt.

3. Zahnrad nach einem der Ansprüche 1 bis 2,
**dadurch gekennzeichnet, dass** der Haltering (50) Bewegungsfreiheit relativ zur Nabe (20) in einer Richtung parallel zur Drehachse (AX) hat, wobei die Bewegungsfreiheit auf ein axiales Spiel (91) beschränkt ist.

4. Zahnrad nach einem der Ansprüche 1 bis 3,
**dadurch gekennzeichnet, dass** der ringförmige Mittelabschnitt (25) geometrisch in einen virtuellen Mittelzylinder (C1) eingeschrieben ist, der einen als "mittlerer Radius (R1)" bezeichneten Radius aufweist, dass der Halteabschnitt des ringförmigen Endabschnitts (30) geometrisch in einen virtuellen Endzylinder (C2) eingeschrieben ist, der einen als "Endradius (R2)" bezeichneten Radius aufweist, und dass der mittlere Radius (R1) größer als der Endradius (R2) ist.

5. Zahnrad nach Anspruch 4,
**dadurch gekennzeichnet, dass** der Haltering (50) geometrisch in einen virtuellen Haltezylinder (C3) eingeschrieben ist, der einen als "Halteradius (R3)" bezeichneten Radius aufweist, und dass der Halteradius (R3) kleiner oder gleich dem mittleren Radius (R1) ist.

6. Zahnrad nach einem der Ansprüche 1 bis 5,
**dadurch gekennzeichnet, dass** der ringförmige Endabschnitt (30) einen axialen Anschlag (32) aufweist, der radial von dem Halteabschnitt (31) vorsteht, dass der Halteabschnitt (31) in der Höhe zwischen dem axialen Anschlag (32) und dem mittleren ringförmigen Abschnitt (25) angeordnet ist, dass der Haltering (50) in der Höhe zwischen dem mittleren ringförmigen Abschnitt (25) und dem axialen Anschlag (32) verriegelt ist, und dass mindestens ein axiales Spiel (91) den Haltering (50) und den mittleren ringförmigen Abschnitt (25) oder den Haltering (50) und den axialen Anschlag (32) in der Höhe trennt.

7. Zahnrad nach Anspruch 6,
**dadurch gekennzeichnet, dass** der Haltering (50) aus einem Material besteht, das sich unter Wärmeeinwirkung ausdehnt.

8. Zahnrad nach einem der Ansprüche 4 bis 5,
**dadurch gekennzeichnet, dass** der Haltering (50) ein Spiralring (52) ist.

9. Zahnrad nach einem der Ansprüche 6 bis 8,
**dadurch gekennzeichnet, dass** der axiale Anschlag und der Halteabschnitt (31) einen ringförmigen Raum (33) begrenzen, wobei der Haltering (50) zumindest teilweise in dem ringförmigen Raum angeordnet ist.

10. Zahnrad nach einem der Ansprüche 6 bis 9,
**dadurch gekennzeichnet, dass** der axiale Anschlag und der Halteabschnitt (31) zwei Bestandteile der Nabe sind.

11. Zahnrad nach einem der Ansprüche 1 bis 9,
**dadurch gekennzeichnet, dass** der ringförmige Endabschnitt (30) eine Nut (34) aufweist, dass der Halteabschnitt (31) die Nut (34) in der Höhe in Bezug auf den mittleren ringförmigen Abschnitt (25) verschiebt, dass der axiale Anschlag einen elastischen Ring (55) umfasst, der in die Nut (34) eingesetzt ist und der aus der Nut (34) herausragt, dass der Haltering (50) zwischen dem mittleren ringförmigen Abschnitt (25) und dem elastischen Ring (55) in der Höhe blockiert ist, und dass mindestens ein axiales Spiel (91) den Haltering (50) und den mittleren ringförmigen Abschnitt (25) oder den Haltering (50) und den elastischen Ring (55) in der Höhe trennt.

12. Zahnrad nach einem der Ansprüche 1 bis 9,
**dadurch gekennzeichnet, dass** das Zahnrad (10) mindestens zwei der Halteringe (50) aufweist, die in der Höhe auf beiden Seiten des zentralen ringförmigen Abschnitts (25) der Nabe (20) angeordnet sind.

13. Zahnrad nach einem der Ansprüche 1 bis 10,
**dadurch gekennzeichnet, dass** das Zahnrad (10) ein Vorgelegerad oder ein Planetenrad eines Planetenradgetriebes (5) ist.

14. Zahnradgetriebe,
**dadurch gekennzeichnet, dass** das Zahnradgetriebe ein Zahnrad (10) nach einem der Ansprüche 1 bis 11 umfasst,
und dass das Zahnradgetriebe ein Schwingungsmesssystem (60) umfasst, das durch das Zahnrad (10) induzierte Schwingungen misst.

15. Leistungsübertragungsgetriebe (4) zum Übertragen von Leistung von einer Antriebsanlage (3) zu einem Rotor (2), der zumindest am Auftrieb oder Vortrieb eines Luftfahrzeugs (1) beteiligt ist,
**dadurch gekennzeichnet, dass** das Leistungsübertragungsgetriebe (4) ein Zahnrad (10) nach einem der Ansprüche 1 bis 11 aufweist.

16. Leistungsübertragungsgetriebe nach Anspruch 15,
**dadurch gekennzeichnet, dass** das Leistungsübertragungsgetriebe (4) ein Schwingungsmesssystem (60) aufweist, das durch das Zahnrad (10) induzierte Schwingungen misst.

17. Luftfahrzeug (1),
**dadurch gekennzeichnet, dass** das Luftfahrzeug (1) ein Zahnrad (10) nach einem der Ansprüche 1 bis 11 aufweist.

18. Luftfahrzeug (1) nach Anspruch 17,
**dadurch gekennzeichnet, dass** das Luftfahrzeug (1) ein Schwingungsmesssystem (60) aufweist, das durch das Zahnrad (10) induzierte Schwingungen misst.

## Claims

1. Toothed wheel (10) of a gear, said toothed wheel (10) comprising a hub (20) and teeth (40) borne by the hub (20), said hub (20) extending freely at an elevation (Z) along a rotational axis (AX) of the hub, said hub (20) comprising an annular middle section (25) bearing said teeth (40) and at least one annular outer section (30) protruding at an elevation (Z) from said annular middle section (25), said toothed wheel (10) comprising at least one retention ring (50), said retention ring (50) being provided around a part known as the "retention part (31) "of an annular outer section (30),
**characterised in that** a radial clearance (90) separates said retention ring (50) and said retention part (31) in a radial direction in an orthogonal plane of the rotational axis, the function of said retention ring (50) being to limit an opening of said hub (20) after a gap to generate a detectable vibration.

2. Toothed wheel according to claim 1,
**characterised in that** said retention ring (50) does not exercise any radial compressive force on said hub (20) in the absence of a gap in the hub (20).

3. Toothed wheel according to any one of claims 1 to 2,
**characterised in that** said retention ring (50) has a freedom of movement relative to said hub (20) along a direction parallel to said rotational axis (AX), said freedom of movement being restricted to an axial clearance (91).

4. Toothed wheel according to any one of claims 1 to 3,
**characterised in that** said annular middle section (25) is geometrically inscribed on a virtual middle cylinder (C1) having a radius known as the "median radius (R1)", said retention part of the annular outer section (30) being geometrically inscribed in an outer virtual cylinder (C2) having a radius known as the "outer radius (R2)", said median radius (R1) being greater than the outer radius (R2).

5. Toothed wheel according to claim 4,
**characterised in that** said retention ring (50) is geometrically inscribed in a virtual retention cylinder (C3) having a radius known as the "retention radius (R3)", said retention radius (R3) being less than or equal to the median radius (R1).

6. Toothed wheel according to any one of claims 1 to 5,
**characterised in that** said annular outer section (30) has an axial stop (32) which protrudes in a radial direction from said retention part (31), said retention part (31) being arranged at an elevation between said axial stop (32) and the annular middle section (25), said retention ring (50) being locked at an elevation between the annular middle section (25) and said axial stop (32), at least one axial clearance (91) separating said retention ring (50) and the annular middle section (25) or said retention ring (50) and said axial stop (32) at an elevation.

7. Toothed wheel according to claim 6,
**characterised in that** said retention ring (50) comprises a material which expands when heat is applied.

8. Toothed wheel according to any one of claims 4 to 5,
**characterised in that** said retention ring (50) is a spiral ring (52).

9. Toothed wheel according to any one of claims 6 to 8,
**characterised in that** said axial stop and said retention part (31) delimit an annular space (33), said retention ring (50) being at least partially arrange in said annular space.

10. Toothed wheel according to any one of claims 6 to 9,
**characterised in that** said axial stop and said retention part (31) are two constituent parts of the hub.

11. Toothed wheel according to any one of claims 1 to 9,
**characterised in that** said annular outer section (30) has a recess (34), said retention part (31) displacing said recess (34) relative to the annular middle section (25) at an elevation, said axial stop comprising an elastic ring (55) which is inserted into said recess (34) and which extends outside of said recess (34), said retention ring (50) being locked at an elevation between the annular middle section (25) and the elastic ring (55), at least one axial clearance (91) separating said retention ring (50) and the annular middle section (25) or said retention ring (50) and said elastic ring (55) at an elevation.

12. Toothed wheel according to any one of claims 1 to 9,
**characterised in that** said toothed wheel (10) comprises at least two of said retention rings (50) which are provided at an elevation on either side of the annular middle section (25) of the hub (20).

13. Toothed wheel according to any one of claims 1 to 10,
**characterised in that** said toothed wheel (10) is a combination wheel or a satellite of an epicyclic gear train (5).

14. Gear device,
**characterised in that** said gear device comprises a toothed wheel (10) according to any one of claims 1 to 11, said gear device comprising a vibration measuring system (60) which measures vibrations induced by said toothed wheel (10).

15. Power transmission box (4) intended to transmit a power from a powerplant installation (3) to a rotor (2) involved in at least the lifting or propulsion of an aircraft (1),
**characterised in that** said power transmission box (4) comprises a toothed wheel (10) according to any one of claims 1 to 11.

16. Power transmission box according to claim 15,
**characterised in that** said power transmission box (4) comprises a vibration measurement system (60) which measures the vibrations induced by said toothed wheel (10).

17. Aircraft (1), **characterised in that** said aircraft (1) comprises a toothed wheel (10) according to any one of claims 1 to 11.

18. Aircraft (1) according to claim 17,
**characterised in that** said aircraft (1) comprises a vibration measurement system (60) which measures the vibrations induced by said toothed wheel (10).
